# EUROPÄISCHE PATENTSCHRIFT

(11) **EP 2 093 662 B1**
(45) Veröffentlichungstag und Bekanntmachung des Hinweises auf die Patenterteilung: **31.05.2017**
(21) Anmeldenummer: 09152485.0
(22) Anmeldetag: 10.02.2009
(51) Int. Cl.: G06F 9/38, G06F 9/46, G06F 9/48

(54) **Verfahren zur Behandlung von Unterbrechungsaufforderungen bei einem Prozessor**
Method for processing interrupt requests in a processor
Procédé de traitement de requêtes d'interruption dans un processeur

(30) Priorität: 25.02.2008 DE 102008010943
(43) Veröffentlichungstag der Anmeldung: 26.08.2009
(73) Patentinhaber: Fujitsu Technology Solutions Intellectual Property GmbH, 80807 München (DE)
(72) Erfinder: Gross, Juergen, 83026, Rosenheim (DE)
(74) Vertreter: Epping - Hermann - Fischer

(56) Entgegenhaltungen:
- EP-A2- 1 936 500
- WO-A-97/44732
- US-A- 5 515 538
- KLEIMAN S ET AL: "Symmetric multiprocessing in Solaris 2.0" INTELLECTUAL LEVERAGE. SAN FRANCISCO, FEB. 24 - 28, 1992; [PROCEEDINGS OF THE COMPUTER SOCIETY INTERNATIONAL CONFERENCE (COMPCON) SPRING], LOS ALAMITOS, IEEE COMP. SOC. PRESS, US, Bd. CONF. 37, 24. Februar 1992 (1992-02-24), Seiten 181-186, XP010027135 ISBN: 978-0-8186-2655-5

## Beschreibung

Die Erfindung betrifft ein Verfahren zur Behandlung von Unterbrechungsaufforderungen bei einem Prozessor, der wenigstens zwei Threads parallel betreiben kann.

Ein Prozessor, also eine CPU (Central Processing Unit) in einem Computersystem, steuert mittels einer Software - in der Regel das Betriebssystem - die Komponenten eines Systems. Ein Prozessor besteht dabei im Allgemeinen aus Registern, einem Rechenwerk, einem Befehlsdecoder, welcher Maschinenbefehle in verwertbare Instruktionen übersetzt und - falls nötig - in einzelne Arbeitsschritte zerlegt sowie einem Steuerwerk, das durch Setzen geeigneter Signale die übrigen Bestandteile des Prozessors steuert. Ein Register ist dabei ein Speicher für Zwischenergebnisse (beispielsweise von Rechenoperationen), auf die besonders schnell zugegriffen werden kann. Es speist gemäß gesetzten Signalen einen Datenpfand und die Steuereinheit ohne Wartezyklus mit Daten.

Um die Leistungsfähigkeit eines Prozessors zu steigern, wird bei modernen Prozessoren oftmals das so genannte Hyperthreading angewandt. Unter Hyperthreading versteht man die parallele Verarbeitung von so genannten Threads (auch bezeichnet als Ausführungsstränge) sowie von Prozessen durch wenigstens zwei logische Prozessoren, die auf einem gemeinsamen Chip realisiert sind. Ein Thread charakterisiert in diesem Zusammenhang die Ausführungsreihenfolge der Abarbeitung der Software des Systems und stellt einen sequentieller Abarbeitungslauf eines Prozesses dar.

Die Prozessoren werden als logische Prozessoren bezeichnet, da zumindest Teile der Hardware nur einfach vorhanden sind und von den Prozessoren gemeinsam genutzt werden. So bleiben die Größe und die Anzahl der Rechenwerke im Allgemeinen unverändert. Bestimmte Hardwarekomponenten sind hingegen redundant vorhanden. Um die zwei logischen Prozessoren auf einem Chip zu realisieren wird beispielsweise ein zusätzlicher Registersatz zur Verfügung gestellt. Des Weiteren wird ein eigener so genannter Advanced Programmable Interrupt Controller (APIC), der Unterbrechungsaufforderungen von Geräten im System entgegennimmt, sowie weitere interne Verwaltungsstrukturen vorgesehen. Beide logischen Prozessoren arbeiten dabei weitgehend unabhängig voneinander, was den Datendurchsatz steigert und die Auslastung des physikalischen Prozessors erhöht, wodurch dessen Ressourcen besser genutzt werden.

Die Leistungsfähigkeit einzelner Threads wird durch Unterbrechungen (auch bezeichnet als Interrupts) oftmals stark eingeschränkt. Dabei gibt es zum einen die so genannten synchronen Unterbrechungen, die durch das aktuell ausgeführte Programm selbst herbeigeführt werden. Synchrone Unterbrechungen lassen den Ablauf von in einer Befehlspipeline des Threads abgespeicherten und auszuführenden Befehlen in ihrer Reihenfolge unverändert. Eine Befehlspipeline ist dabei eine Aufreihung von Befehlen die nacheinander in einem Thread abgearbeitet werden. Beispiele für synchrone Unterbrechungen sind fehlende Adressübersetzungsinformationenen (so genanntes "TLB (Translation Lookaside Buffer)-Miss"). Daneben gibt es noch eine Vielzahl weiterer synchroner Unterbrechungen, die durch Hard- oder Software - ausgelöst durch den aktuell abgearbeiteten Programmcode - auftreten können.

Des weiteren treten asynchrone Unterbrechungen auf, die ohne Bezug zum aktuellen Programm sein können, wie Nachrichten von weiteren Prozessoren (beispielsweise bei einem Netzausfall) oder Peripheriegeräten des Systems, durch welche die in der Befehlspipeline des Threads abgespeicherten und auszuführenden Befehle verworfen werden müssen, um stattdessen Befehle einer Routine zur Behandlung der Unterbrechung laden und bearbeiten zu können.

Jede Unterbrechung führt dabei in der Regel zu einer Art Zustandswechsel des Threads, was mit einer Unterbrechung des gerade laufenden Prozesses und der Aufnahme eines Programms zur Unterbrechungsbehandlung gleichzusetzen ist. Dabei muss ein momentaner Kontext des Threads (Registerinhalte, Adresse der Unterbrechung) in einem Arbeitsspeicher abgelegt und dadurch gesichert werden. Im Anschluss muss der Prozessor Daten zur Behandlung der Unterbrechung (beispielsweise die Adresse eines bestimmten Befehls oder die Zugriffsadresse, für die der Adresseintrag fehlt) in Registern für die Unterbrechungsbehandlung ablegen, das heißt ein Kontext für die eigentliche Behandlung der Unterbrechung muss geladen werden. Diese Prozedur erfordert viel Zeit und Aufwand, was oftmals zu dem Verlust von vielen hundert Prozessorzyklen führt, bevor der unterbrochene Kontext wieder aus dem Speicher abgerufen und erneut aufgenommen werden kann.

Die sich bei Auftreten einer Unterbrechungsaufforderung in der Befehlspipeline befindenden Befehle zur Abarbeitung des (unterbrochenen) Programms werden verworfen. Die Pipeline wird daraufhin mit für die Behandlung der Unterbrechung nötigen Befehlen gefüllt. Nach Behandlung der Unterbrechung muss die Befehlspipeline erneut geleert und neu gefüllt werden um das vorher unterbrochene Programm fortsetzen oder ein neues Programm starten zu können, was wiederum Zeit und Rechenleistung in Anspruch nimmt.

Die US 5,515,538 betrifft eine Technik zum Bedienen von Interrupts durch einen Prozessor mittels so genannter Kernel Interrupt Handler Threads, die die Interrupt-Anfragen von Anfang bis Ende bedienen. Aus Effizienzgründen erfordern die Interrupt-Handler-Threads keinen vollständigen Kontextwechsel, sofern der Interrupt-Handler-Thread nicht blockiert wird. Hierzu macht der Kernel Gebrauch von vorbereiteten Interrupt-Handler-Threads für gesteigerte Effizienz.

Der Artikel "Symmetric Multiprocessing in Solaris 2.0" von S. Kleiman et al., Proc. COMPCO, Bd. 36, S. 181-186, 1992, beschreibt den Kernel des SunOS 5.0 Betriebssystems.

Die WO 97/44732 A1 beschreibt einen Multithread-Mikroprozessor, der zur Ausführung wenigstens zwei konkurrierender Threads geeignet ist. Der Mikroprozessor umfasst einen so genannten Kontextfile, der zum Speichern einer Mehrzahl von Kontexten geeignet ist. Der Mikroprozessor kann mehrere Threads ausführen, wobei jeder Thread seinen eigenen Kontext innerhalb des Mikroprozessors besitzt.

Aufgabe der Erfindung ist es, ein Verfahren zur Behandlung von Unterbrechungsaufforderungen bei einem Prozessor, der wenigstens zwei Threads mit jeweils einer eigenen Befehlspipeline parallel betreiben kann, zu beschreiben, durch das die Unterbrechungsdauer verkürzt und damit die Leistungsfähigkeit einzelner Threads und des Prozessors gesteigert werden kann.

Die Aufgabe wird durch ein Verfahren der eingangs genannten Art gelöst, das dadurch gekennzeichnet ist, dass einer der wenigstens zwei Threads als Hauptthread definiert wird, der zur Abarbeitung eines Programms vorgesehen ist. Einer der wenigstens zwei Threads wird als Interrupt-Thread dem Hauptthread zugeordnet. Der Hauptthread wird vom Prozessor gestartet. Nach dem Empfangen einer Unterbrechungsaufforderung wird die Abarbeitung des Programms im Hauptthread angehalten und es werden Unterbrechungsdaten in einem dem Interrupt-Thread zugeordneten Register abgelegt. Danach wird die Abarbeitung einer Unterbrechungsroutine im Interrupt-Thread gestartet, die wenigstens teilweise ausgeführt wird. Wurde wenigstens der Teil der Unterbrechungsroutine im Interrupt-Thread ausgeführt, wird das Wiederaufnehmen der Abarbeitung des Programms im Hauptthread durch Abgabe eines Signals vom Interrupt-Thread an den Hauptthread gestartet. Während der wiederaufgenommenen Abarbeitung des Programms im Hauptthread werden Nacharbeiten der Unterbrechungsbehandlung im Interrupt-Thread ausgeführt.

Das Verfahren macht sich dabei zu Nutze, dass die Leistungsfähigkeit des Hauptthreads erhöht werden kann, indem die Behandlung von Unterbrechungen an einen weiteren, Thread - den Interrupt-Thread -, der dem Hauptthread zugeordnet ist, abgegeben wird. Der Hauptthread bleibt somit von der Unterbrechungsbehandlung weitgehend unbeeinflusst. Im Unterschied zur Bekannten Bearbeitung der Unterbrechungsroutine im Hauptthread ist es bei dem Verfahren gemäß der Anmeldung nicht notwendig, den Inhalt der Befehlspipeline des Hauptthreads zu verwerfen. Ein erneutes, zeitaufwändiges Laden der Befehlspipeline nach Behandeln der Unterbrechung entfällt damit.

Dadurch, dass die Bearbeitung des Programms im Hauptthread durch den Prozessor angehalten und nach dem Durchführen des zumindest einen Teils der Unterbrechungsroutine im Interrupt-Thread wieder aufgenommen wird, kann das Verfahren auch in Fällen eingesetzt werden, in denen eine Unterbrechung des Programms während der Durchführung der Unterbrechungsroutine notwendig ist.

Dabei wird die Weiterverarbeitung des Programms im Hauptthread durch das Abgeben eines Signals vom Interrupt-Thread an den Hauptthread wieder gestartet.

In einer bevorzugten Ausgestaltung des Verfahrens wird die Abarbeitung des Programms im Hauptthread nach dem Durchführen des zumindest einen Teils der Unterbrechungsroutine im Interrupt-Thread durch den Interrupt-Thread angehalten und danach die Unterbrechungsroutine im Hauptthread weitergeführt. Nach der Beendigung der Unterbrechungsroutine im Hauptthread wird die Abarbeitung des Programms im Hauptthread wieder aufgenommen. Auf diese Weise können auch Fälle abgedeckt werden, in denen die Unterbrechungsroutine teilweise im Hauptthread ausgeführt werden soll. Dennoch können das Programm und die Unterbrechungsroutine vorteilhaft zumindest zeitweise nebeneinander ausgeführt werden.

Eine weitere Ausgestaltung des Verfahrens sieht vor, dass die Unterbrechungsbehandlung in dem Interrupt-Thread durch den Prozessor vorinitialisiert wird, indem zur Unterbrechungsbehandlung nötige Registerwerte in ein dem Interrupt-Thread zugeordnetes Register geladen werden. Damit entfällt das Laden der Registerwerte zum Zeitpunkt des Auftretens einer Unterbrechungsaufforderung und die Ausführung einer Unterbrechungsroutine im Interrupt-Thread kann schneller gestartet werden.

Weitere Ausgestaltungen des Verfahrens sehen vor, dass nach der Vorinitialisierung des Interrupt-Threads oder nach der Behandlung von Unterbrechungen und gegebenenfalls nach Durchführung von Nacharbeiten der Unterbrechungsbehandlung der Interrupt-Thread durch den Prozessor in einen Schlafmodus versetzt wird.

Eine weitere Ausgestaltung sieht vor, dass der Interrupt-Thread erst dann durch den Prozessor aktiviert wird, wenn eine Unterbrechungsaufforderung auftritt.

Weitere Einzelheiten und Ausgestaltungen des erfindungsgemäßen Verfahrens sind in den Unteransprüchen angegeben.

Die Erfindung wird nachfolgend an Ausführungsbeispielen anhand der Zeichnungen näher erläutert.

In den Zeichnungen zeigen:
- Figur 1: ein Ablaufdiagramm für ein Verfahren zur Behandlung von Unterbrechungsaufforderungen bei einem Prozessor, der zur parallelen Ausführung von wenigstens zwei Threads geeignet ist,
- Figur 2: ein Ablaufdiagramm für ein Verfahren zur Behandlung von Unterbrechungsaufforderungen bei einem Prozessor, der zur parallelen Ausführung von wenigstens zwei Threads geeignet ist, in einem weiteren Ausführungsbeispiel,
- Figur 3: ein Ablaufdiagramm für ein Verfahren zur Behandlung von Unterbrechungsaufforderungen bei einem Prozessor, der zur parallelen Ausführung von wenigstens zwei Threads geeignet ist, in einem dritten Ausführungsbeispiel,
- Figur 4: ein Ablaufdiagramm für ein Verfahren zur Behandlung von Unterbrechungsaufforderungen bei einem Prozessor nach dem Stand der Technik.

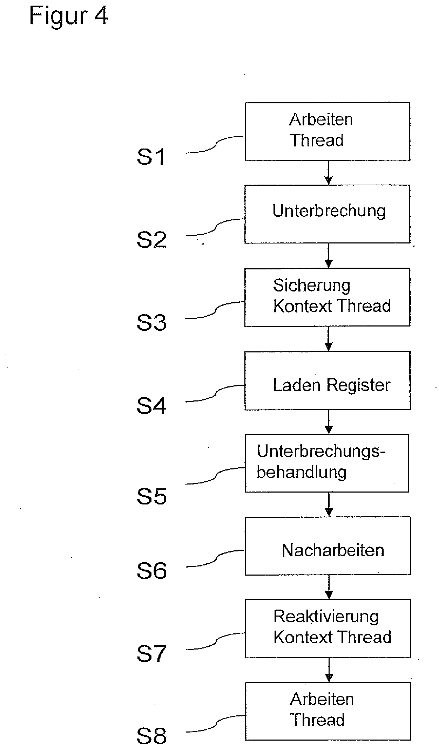

Figur 4 zeigt ein Ablaufdiagramm für die Behandlung von Unterbrechungsaufforderungen bei einem Prozessor, wie sie nach dem Stand der Technik durchgeführt wird. Der Prozessor kann dabei zum Hyperthreading ausgelegt sein, so dass mehrere Threads parallel verarbeitet werden können.

Schritt S1 beschreibt das Abarbeiten von Befehlen einer Befehlspipeline zum Ausführen eines Programms in einem Thread.

In Schritt S2 ergeht eine Unterbrechungsaufforderung auf Grund einer synchronen oder asynchronen Unterbrechung, die zur Unterbrechung des aktuell im Thread ausgeführten Programms führt.

Ein momentaner (unterbrochener) Kontext des Threads wird daraufhin gesichert (Schritt S3), indem entsprechende Registerinhalte bzw. auch die Adresse der Unterbrechung in einem Arbeitsspeicher abgelegt werden, was sehr zeitaufwändig ist. Die Befehle in der Befehlspipeline müssen gelöscht und Befehle zur Abarbeitung eines Programms zur Behandlung der Unterbrechung geladen werden.

Danach muss ein neuer Kontext zur Behandlung der Unterbrechung vorbereitet werden, indem entsprechende Register geladen werden (Schritt S4). Bei speziellen Prozessoren, die einen eigenen Registersatz für die Unterbrechungsbehandlung reserviert haben, kann das Laden der Register teilweise entfallen.

In Schritt S5 wird eine Unterbrechungsroutine im Thread durchgeführt, Nacharbeiten zur Unterbrechungsbehandlung werden in Schritt S6 ausgeführt. Die Nacharbeiten können dabei das Führen von Zugriffsstatistiken oder das Befüllen eines TLB-Software-Caches beinhalten.

Ist die Unterbrechungsbehandlung vollständig ausgeführt, so muss der vorher unterbrochene Kontext erneut aktiviert werden, indem die abgespeicherten Register wieder aus dem Speicher geladen werden (Schritt S7). Des Weiteren muss die Befehlspipeline wieder mit Befehlen zur (Weiter)Bearbeitung des aktuellen Programms geladen werden.

Daraufhin beginnt der Thread wieder mit der Abarbeitung der Befehle in der Befehlspipeline und das vorher unterbrochene Programm wird fortgesetzt bzw. ein neues Programm wird ausgeführt (Schritt S8).

Dadurch dass der unterbrochene Kontext erst gespeichert und danach wieder aus dem Speicher geladen werden muss und der für die Unterbrechungsbehandlung relevante Kontext ebenfalls geladen werden muss, erfordert die Behandlung der Unterbrechung viel Zeit- und Rechenaufwand. Zudem muss die Befehlspipeline bei dem Verfahren nach dem Stand der Technik mehrfach gelöscht und neu geladen werden, da eine Befehlspipeline sowohl für die Ausführung des aktuellen Programms als auch für die Unterbrechungsbehandlung benutzt wird.

Eine Unterbrechung, die relativ leicht zu behandeln ist, kann somit mehrere hundert Prozessorzyklen erfordern, bis die Bearbeitung des aktuellen Programms wieder aufgenommen werden kann oder ein Programmwechsel zum Starten eines neuen Programms ausgeführt wird. Daher wird im Folgenden ein Verfahren beschrieben, mit dem die Unterbrechungsdauer verkürzt und damit die Leistungsfähigkeit eines Threads bzw. des Prozessors gesteigert wird.

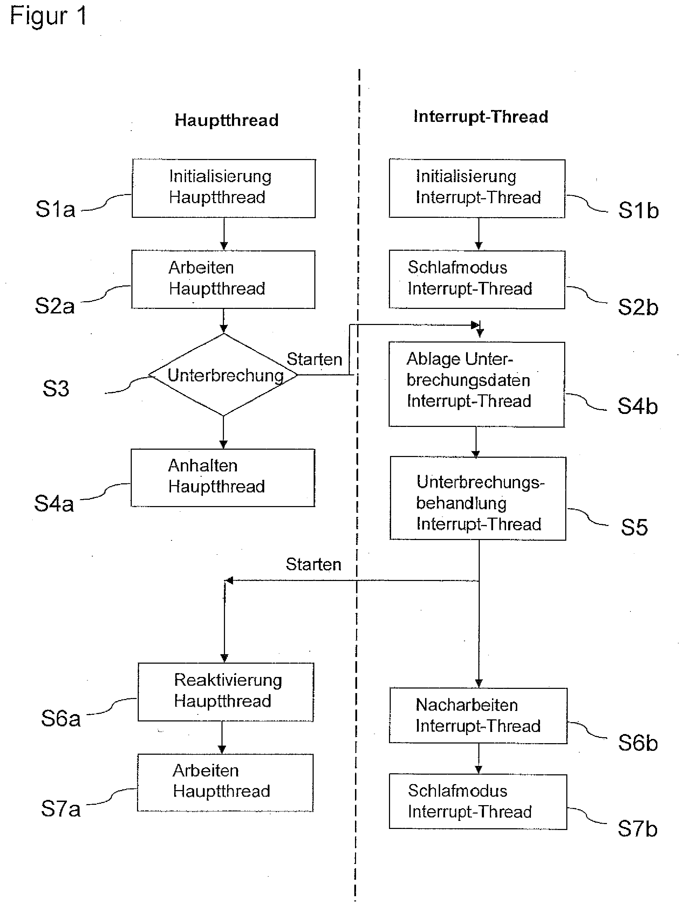

Figur 1 zeigt ein Flussdiagramm für ein Verfahren zur Behandlung von Unterbrechungsaufforderungen bei einem Prozessor, der zur parallelen Ausführung von wenigstens zwei Threads geeignet ist, wobei jeder Thread eine eigene Befehlspipeline aufweist.

In Schritt S1a und S1b werden ein Hauptthread und ein Interrupt-Thread durch den Prozessor initialisiert, indem Register der Threads mit Daten zur Abarbeitung von bestimmten Programmen und Routinen gefüllt werden, die in entsprechenden Routinen eines Betriebssystems vordefiniert sind. Der Prozessor erhält dabei Anweisungen mit Befehlen zur Initialisierung sowie die zur Ablage in die Register vorgesehen Informationen und Daten von dem Betriebssystem, das für die - dem Verfahren zugrunde liegende - Behandlung von Unterbrechungen entsprechend angepasst ist. Der Prozessor führt die Anweisungen gemäß dem Betriebssystem aus und startet damit Initialisierung der Threads.

Dies kann für die beiden Threads unabhängig voneinander geschehen. Ein dem Interrupt-Thread zugeordnetes Register kann dabei beispielsweise mit im Betriebssystem vordefinierten Daten zur Durchführung von Unterbrechungsroutinen gefüllt werden und damit zur Unterbrechungsbehandlung vorinitialisiert werden. Das Betriebssystem kann dabei verschiedene Definitionen zur Behandlung der verschiedenen möglichen Unterbrechungen (synchron, asynchron) aufweisen. Durch das Laden der Daten von Unterbrechungsroutinen entfällt ein Laden von zur Unterbrechungsbehandlung geeigneten Registerwerten bei einer Unterbrechungsaufforderung, was zu einem schnelleren Anlaufen einer Unterbrechungsroutine und damit zu einer schnelleren Abarbeitung der Unterbrechung führt.

In Schritt S2a übernimmt der Hauptthread - aktiviert durch den Prozessor - das Abarbeiten von Befehlen in der Befehlspipeline und beginnt dadurch die Abarbeitung eines Programms.

Hauptthread und Interrupt-Thread weisen jeder eine eigene Befehlspipeline auf. Das Vorhandensein von je einer Befehlspipeline für den Hauptthread und den Interrupt-Thread erspart bei einer Unterbrechung das Leeren der Befehlspipeline, das anschließende Füllen mit zur Unterbrechungsbehandlung nötigen Befehlen sowie nach der Unterbrechungsbehandlung das erneute Leeren und Befüllen mit den Befehlen für die Weiterführung des Programms zur Abarbeitung durch den Hauptthread. Dadurch kann Zeit und Rechenleistung gespart und die Unterbrechungsdauer verkürzt werden.

Nach der Initialisierung wird (parallel zu Schritt S2a) der Interrupt-Thread durch den Prozessor in eine Art Schlafmodus bzw. Stand-by Modus versetzt (Schritt S2b), indem ein entsprechender Befehl vom Betriebssystem abgesetzt, vom Prozessor umgesetzt und an den Interrupt-Thread weitergeleitet wird, wodurch dieser in einen stromsparenden Modus versetzt wird.

In Schritt S3 tritt eine Unterbrechungsaufforderung auf. Ursache kann eine durch den Prozessor selbst herbeigeführte synchrone Unterbrechung - beispielsweise ausgelöst durch eine fehlende Adressübersetzungsinformation - oder auch eine von Peripheriegeräten oder anderen Prozessoren verursachte asynchrone Unterbrechung sein.

In Schritt S4a wird der Hauptthread durch den Prozessor angehalten, indem dieser entsprechende Befehle des Betriebssystems, in denen definiert ist, dass die ausgeführte Unterbrechungsroutine den Hauptthread anhalten soll, umsetzt. Der aktuelle Kontext des Hauptthreads bleibt dabei genauso erhalten wie die beim Anhalten des Hauptthreads gestoppte zugehörige Befehlspipeline. Der Hauptthread befindet sich durch das Anhalten lediglich in einer Art "Stand-by Modus", bleibt aber durch die Unterbrechungsbehandlung selbst im Wesentlichen unberührt.

In Schritt S4b geht ein Startbefehl (ausgelöst wiederum durch im Betriebssystem vordefinierte Einstellungen) vom Prozessor an den Interrupt-Thread, wodurch dieser aus dem Schlafmodus geholt wird. Der Prozessor legt Daten der Unterbrechung - beispielsweise die Adresse der Unterbrechung - in einem dem Interrupt-Thread zugewiesenen Register ab. Dabei können dem Interrupt-Thread und Hauptthread voneinander unabhängige Register zugewiesen sein, um sicherzustellen, dass jeweils ein Register zur Unterbrechungsbehandlung (im Interrupt-Thread) sowie Register zur Abhandlung der aktuellen Programme (beim Hauptthread) zur Verfügung stehen.

In Schritt S5 beginnt der Interrupt-Thread mit der Abarbeitung der Unterbrechungsroutine, während der Hauptthread im "Stand-by Modus" verweilt (siehe Schritt S4a).

Noch während der Unterbrechungsbehandlung, also der Abarbeitung der Unterbrechungsroutine, im Interrupt-Thread wird der Hauptthread durch diesen wieder reaktiviert (Schritt S6a). Dies kann beispielsweise an einer ganz bestimmten Stelle der Unterbrechungsroutine geschehen, beispielsweise nachdem die eigentliche Unterbrechungsbehandlung bereits abgeschlossen ist, aber noch Nacharbeiten anstehen, die erledigt werden müssen. An dieser Stelle kann durch den Interrupt-Thread ein Signal an den Hauptthread geleitet werden, wodurch dieser wieder aktiviert wird.

In Schritt S6b führt der Interrupt-Thread die Nacharbeiten der Unterbrechungsbehandlung aus, während der Hauptthread bereits wieder durch ein entsprechendes Signal vom Interrupt-Thread aktiviert wurde (siehe Schritt S6a) und wieder begonnen hat das vorher ausgeführte Programm weiter zu verarbeiten (Schritt S7a). Durch dieses kurzeitige parallele Arbeiten der beiden Threads, während die Nacharbeiten zur Unterbrechungsbehandlung noch andauern, kann die Unterbrechungsdauer zusätzlich verkürzt und damit die Leistung des Hauptthreads (und des Prozessors) weiter gesteigert werden.

Nach Ausführung der Nacharbeiten wird der Interrupt-Thread in Schritt S7b durch den Prozessor, der entsprechende Befehle vom Betriebssystem erhalten hat, wieder in den Schlafmodus versetzt. Hauptthread und Interrupt-Thread arbeiten demnach nur für eine kurze Zeit (Schritt S6 und Schritt S7) parallel.

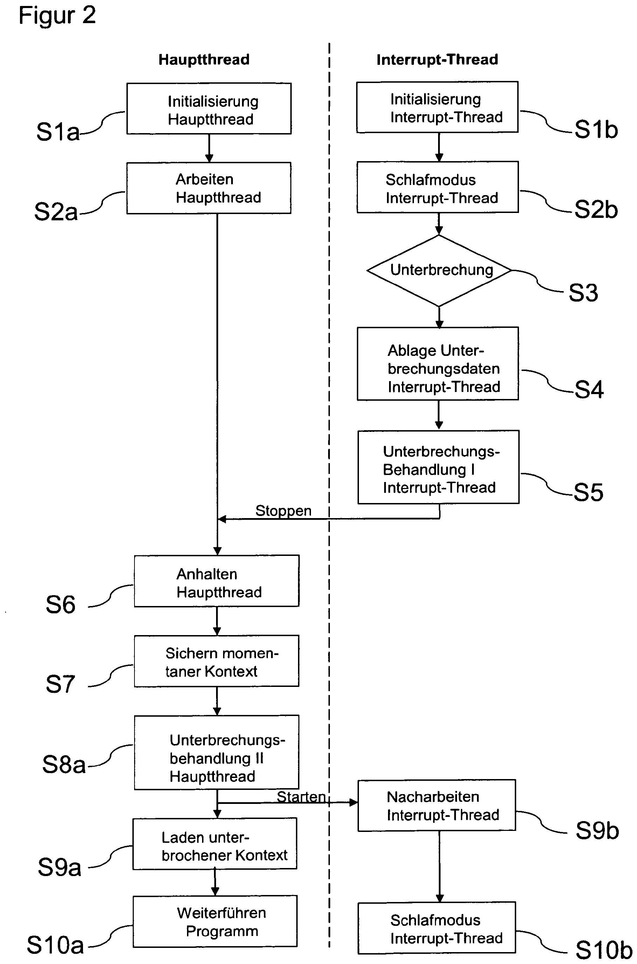

Figur 2 zeigt ein Flussdiagramm für ein Verfahren zur Behandlung von Unterbrechungsaufforderungen bei einem Prozessor, der zur parallelen Ausführung von wenigstens zwei Threads geeignet ist, wobei jeder Thread eine eigene Befehlspipeline aufweist. Dieses Ausführungsbeispiel der Erfindung ist insbesondere für die Behandlung von asynchronen Unterbrechungen, die nicht von dem Prozessor selbst ausgelöst werden, geeignet.

In Schritt S1a und S1b werden wiederum Hauptthread und Interrupt-Thread durch den Prozessor initialisiert (siehe Figur 1 , Schritt S1a/b), indem der Prozessor die Befehle eines angepassten Betriebssystem umsetzt und durch das Betriebssystem vordefinierte Informationen zur Unterbrechungsbehandlung bzw. zur Abarbeitung von Programmen in die den jeweiligen Threads zugewiesenen Register ablegt. Das Register des Interrupt-Threads kann dabei wiederum mit Daten einer Unterbrechungsroutine befüllt und damit zur Behandlung von Unterbrechungen vorinitialisiert werden.

In Schritt S2a beginnt der Hauptthread die Abarbeitung der Befehle aus der zum Hauptthread gehörenden Befehlspipeline, während in Schritt S2b der Interrupt-Thread durch den Prozessor in den Schlafmodus versetzt wird (für Details siehe Figur 1).

Schritt S3 stellt eine Unterbrechungsaufforderung, verursacht durch eine asynchrone Unterbrechung, dar. Die Unterbrechungsaufforderung wird bei diesem Ausführungsbeispiel - auf Grund entsprechender Definitionen im Betriebssystem - von dem Prozessor direkt an den Interrupt-Thread und nicht - wie in Figur 1 dargestellt - an den Hauptthread geleitet.

Der Prozessor legt daraufhin Unterbrechungsdaten in einem dem Interrupt-Thread zugeordneten Register ab (Schritt S4).

In Schritt S5 beginnt der Interrupt-Thread - auf Grund eines vom Betriebssystem abgesetzten und vom Prozessor umgesetzten Befehls - mit der Ausführung der Unterbrechungsroutine. Während dieser Zeit arbeitet der Hauptthread weiter, bleibt also von der Unterbrechung vollkommen unberührt.

Nach Ausführen eines Teils der Unterbrechungsbehandlung durch den Interrupt-Thread - beispielsweise bis zu dem Punkt, an dem ein Abbruch des vom Hauptthread bearbeiteten Programms und die Ausführung eines neuen Programms zur Unterbrechungsbehandlung nötig wird - ergeht ein Stop-Signal vom Interrupt-Thread an den Hauptthread, wodurch dessen Befehlspipeline angehalten und der Hauptthread gestoppt wird (Schritt S6).

In Schritt S7 wird daraufhin der aktuelle Kontext des Hauptthreads gesichert, indem die entsprechenden Informationen in einem Arbeitsspeicher abgelegt werden. Dies ermöglicht, dass das unterbrochene Programm zu einem späteren Zeitpunkt an derselben Stelle fortgeführt werden kann. Die Befehlspipeline wird geleert und mit für die Unterbrechungsbehandlung relevanten Befehlen gefüllt.

In Schritt S8a wird die weitere Unterbrechungsbehandlung durch den Hauptthread aufgenommen, indem dieser beginnt ein zur Unterbrechungsbehandlung nötiges Programm zu bearbeiten. Dafür muss ein für das neue Programm relevanter Kontext, der bereits durch den Interrupt-Thread vorbereitet und an den Hauptthread weitergeleitet werden kann, geladen werden. Durch das Vorbereiten von relevanten Informationen für das neue (zur Unterbrechungsbehandlung nötige) Programm durch den Interrupt-Thread kann die Ladezeit verkürzt werden und die Unterbrechungszeit verringert werden.

Nach der Unterbrechungsbehandlung durch den Hauptthread wird der gesicherte Kontext (siehe Schritt S7) des vorher unterbrochenen Kontexts wieder geladen, wie in Schritt S9a dargestellt ist.

Weiterhin werden, parallel zu Schritt S9a, für eine Nachbearbeitung der Unterbrechungsbehandlung relevante Informationen vom Hauptthread an den Interrupt-Thread weitergeleitet, woraufhin dieser mit den Nacharbeiten der Unterbrechungsbehandlung beginnt (Schritt S9b). Die für die Nacharbeiten relevanten Informationen können Zugriffsstatistiken enthalten oder Daten einer TLB-Software, die beim Nacharbeiten in einen entsprechenden Cache gefüllt werden müssen. Dadurch dass die Nacharbeiten an den Interrupt-Thread abgegeben werden, kann die Dauer der Unterbrechung weiter verkürzt werden und die Leistungsfähigkeit des Prozessors somit erhöht werden.

Nachdem der Kontext des unterbrochenen Programms erneut geladen wurde (Schritt S9a) beginnt der Hauptthread mit der Weiterverarbeitung des vor der Unterbrechungsbehandlung ausgeführten Programms (Schritt S10a). Der Interrupt-Thread kann zu diesem Zeitpunkt noch mit den Nacharbeiten der Unterbrechungsbehandlung beschäftigt sein (siehe Schritt S9b).

Hat der Interrupt-Thread die Nacharbeiten der Unterbrechungsbehandlung beendet, wird er - ausgelöst durch einen entsprechenden Befehl des Betriebssystems - vom Prozessor wieder in den Schlafmodus versetzt (Schritt S10b).

Bei diesem Ausführungsbeispiel kann ein Teil der Unterbrechungsroutine bereits im Interrupt-Thread abgearbeitet werden (Schritt S5) und damit eine Unterbrechung des aktuell ausgeführten Programms (während der weiteren Unterbrechungsbehandlung im Hauptthread) kurz gehalten werden. Dadurch dass Informationen zur Unterbrechung bereits im Interrupt-Thread gesammelt und an den Hauptthread weitergeleitet werden kann die Ladezeit für den neuen zur Problembehandlung nötigen Kontext verkürzt und die Unterbrechungsdauer weiter vermindert werden.
Nach Durchführen der Unterbrechungsbehandlung im Hauptthread können zudem anstehende Nacharbeiten an den Interrupt-Thread abgegeben und damit die Weiterverarbeitung des vorher unterbrochenen Programms schneller begonnen werden. Somit wird die Leistungsfähigkeit des Prozessors bei Unterbrechungen erhöht.

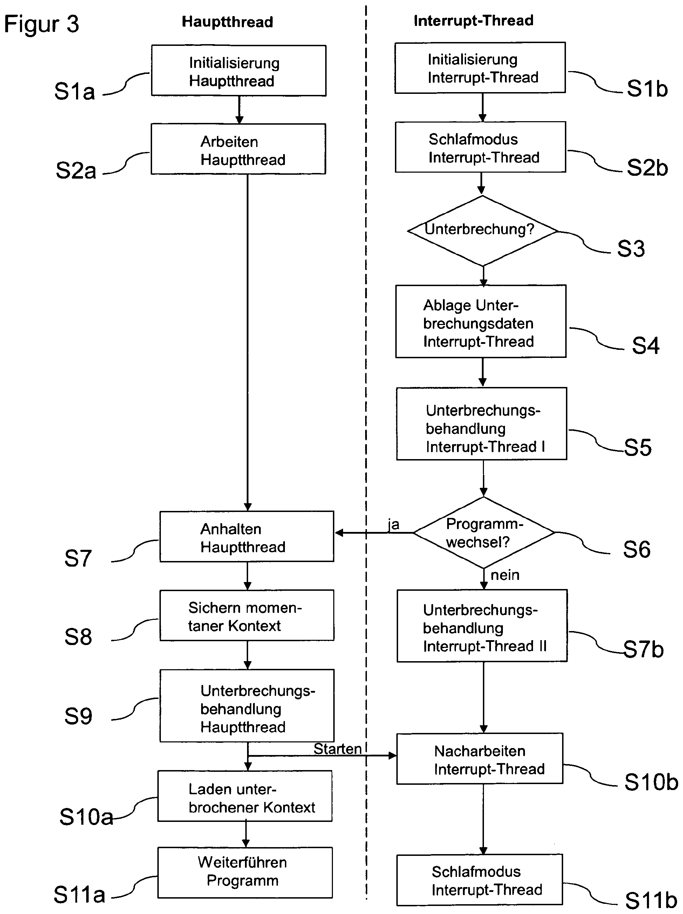

Figur 3 zeigt ein Flussdiagramm für ein Verfahren zur Behandlung von Unterbrechungsaufforderungen bei einem Prozessor, der zur parallelen Ausführung von wenigstens zwei Threads geeignet ist, wobei jeder Thread eine eigene Befehlspipeline aufweist, in einem dritten Ausführungsbeispiel. Auch dieses Ausführungsbeispiel ist - wie die in Figur 2 dargestellte Ausführung der Erfindung - insbesondere für die Behandlung von asynchronen Unterbrechungen geeignet.

Das in Figur 3 dargestellte Ausführungsbeispiel ist bis einschließlich Verfahrensschritt S5 identisch mit der Erfindungsausführung in Figur 2. Für die detaillierte Beschreibung der Schritte S1 mit S5 wird daher an dieser Stelle auf die Erklärung von Figur 2 verwiesen.

In Schritt S5 wird eine Unterbrechungsroutine im Interrupt-Thread zur Behandlung der Unterbrechung ausgeführt. An einer vorbestimmten Stelle der Unterbrechungsbehandlung kann eine Abfrage (Schritt S6) vorgesehen werden, durch die überprüft wird, ob die Unterbrechungsbehandlung Auswirkungen auf den Hauptthread hat. Ob die Unterbrechung Auswirkungen auf den Hauptthread hat, kann dabei in der ausgeführten Unterbrechungsroutine vordefiniert sein.

Hat die Unterbrechungsbehandlung Auswirkung auf den Hauptthread, beispielsweise insofern dass das aktuell vom Hauptthread bearbeitete Programm wegen der Unterbrechungsbehandlung nicht mehr fortgeführt werden kann und daher unterbrochen werden muss und das Laden eines neuen Programms (zur Unterbrechungsbehandlung) nötig ist, dann werden die Schritte S7 bis einschließlich S11a ausgeführt (siehe entsprechende Schritte S6 bis S10a, Figur 2), das heißt der Hauptthread wird durch ein Signal des Interrupt-Threads angehalten (Schritt S7), das aktuell ausgeführte Programm damit unterbrochen, der Kontext des Hauptthreads wird gesichert (Schritt S8) und nach Laden eines neuen für die Unterbrechungsbehandlung relevanten Kontextes wird die Unterbrechungsbehandlung im Hauptthread weitergeführt (Schritt S9). Nach Beenden der Unterbrechungsbehandlung wird der vorher unterbrochene Kontext wieder geladen (Schritt S10a) und das durch die Unterbrechungsbehandlung unterbrochene Programm wieder im Hauptthread bearbeitet (Schritt S11a). Die Nachbearbeitung der Unterbrechungsbehandlung wird - angestoßen durch entsprechende Signale des Hauptthreads - wiederum im Interrupt-Thread ausgeführt (Schritt S10b), der nach Beenden der Nacharbeiten in den Schlafmodus versetzt wird (Schritt S11b). Für eine detaillierte Ausführung dieser Einzelschritte wird wiederum auf Figur 2 (Schritt S6 bis S10) verwiesen.

Hat die Unterbrechungsbehandlung keine Auswirkung auf den Hauptthread, fällt die Antwort auf die in Schritt S6 dargestellte Abfrage also negativ aus, wird die Unterbrechungsbehandlung in diesem Ausführungsbeispiel im Interrupt-Thread fortgesetzt, wie in Schritt S7b dargestellt ist. Der Hauptthread kann dabei ohne angehalten zu werden das aktuelle Programm bearbeiten, wird also durch die Unterbrechungsbehandlung nicht beeinflusst. Die Schritte S7 bis S9a sowie Schritt S10a und S11a entfallen demnach, der Hauptthread verbleibt in diesem Ausführungsbeispiel bei der in Schritt S2a dargestellten Bearbeitung eines Programms. Die Unterbrechungsaufforderung und die Behandlung der Unterbrechung verursachen folglich keinerlei Verzögerung im Arbeitsablauf des Hauptthreads.

Nachdem die Unterbrechungsbehandlung im Interrupt-Thread durchgeführt wurde und die entsprechenden Nacharbeiten (Schritt S10b) beendet sind wird der Interrupt-Thread auch in diesem Ausführungsbeispiel auf Grund eines entsprechenden Befehls vom Betriebssystem in den Schlafmodus versetzt, was in Schritt S11b dargestellt ist.

Zum Starten der Nacharbeiten (Schritt S10b) ist in diesem Ausführungsbeispiel keine Signalabgabe sowie kein Informationsaustausch zwischen Hauptthread und Interrupt-Thread nötig, da alle relevanten Informationen zum Nacharbeiten der Unterbrechungsbehandlung bereits im Interrupt-Thread enthalten sind, da die komplette Unterbrechungsbehandlung (Schritt S5 und Schritt S7b) im Interrupt-Thread durchgeführt wurde.

Dieses Ausführungsbeispiel hat den Vorteil, dass bei auftretenden asynchronen Unterbrechungen, die oftmals zu einem Programmwechsel führen können, erst überprüft werden kann, ob der Hauptthread in die Unterbrechungsbehandlung miteinbezogen werden muss, also ob tatsächlich eine Unterbrechung des aktuell bearbeiteten Programms und die Aufnahme eines neuen Programms zur Unterbrechungsbehandlung nötig ist, oder ob die Unterbrechungsbehandlung ausschließlich im Interrupt-Thread durchführbar ist.

Während dieser Zeit kann der Hauptthread das aktuelle Programm weiter bearbeiten. Erst wenn ein Programmwechsel unvermeidbar ist, wird der Hauptthread durch den Interrupt-Thread angehalten und der momentane Kontext gespeichert, wobei Informationen zum Starten eines neuen Programms bereits durch den Interrupt-Thread vorbereitet worden sind, wodurch der Programmwechsel bzw. das Laden des neuen Kontexts schnell abgewickelt werden und die Zeit der Unterbrechung kurz gehalten werden kann. Dadurch kann die Effizienz bei der Unterbrechungsbehandlung gesteigert werden.

## Patentansprüche

1. Verfahren zur Behandlung von Unterbrechungsaufforderungen bei einem Prozessor, der zur parallelen Ausführung von wenigstens zwei Threads geeignet ist, wobei für jeden der wenigstens zwei Threads eine Befehlspipeline vorgesehen ist, mit den folgenden Schritten:
- Definition eines der wenigstens zwei Threads als Hauptthread zur Abarbeitung eines Programms,
- Zuordnung eines Threads der wenigstens zwei Threads als Interrupt-Thread zu dem Hauptthread,
- Starten des Hauptthreads durch den Prozessor,
- Empfangen einer Unterbrechungsaufforderung,
- Ablegen von Unterbrechungsdaten durch den Prozessor in einem dem Interrupt-Thread zugeordneten Register,
- Starten der Abarbeitung einer Unterbrechungsroutine in dem Interrupt-Thread,
**dadurch gekennzeichnet, dass**
zusätzlich die folgenden Schritte ausgeführt werden:
- Versetzung des Interrupt-Threads in einen Schlafmodus nach einer Vorinitialisierung des Interrupt-Threads,
- Anhalten der Abarbeitung des Programms im Hauptthread nach dem Empfang der Unterbrechungsaufforderung,
- Durchführen eines Teils der Unterbrechungsroutine in dem Interrupt-Thread,
- Wiederaufnehmen der Abarbeitung des Programms im Hauptthread nach dem Durchführen des einen Teils der Unterbrechungsroutine im Interrupt-Thread, wobei die Wiederaufnahme durch Abgeben eines Signals vom Interrupt-Thread an den Hauptthread gestartet wird,
- Ausführen von Nacharbeiten der Unterbrechungsbehandlung im Interrupt-Thread, während der wiederaufgenommenen Abarbeitung des Programms im Hauptthread.

2. Verfahren nach Anspruch 1, bei dem
- die Abarbeitung des Programms im Hauptthread nach dem Durchführen des zumindest einen Teils der Unterbrechungsroutine im Interrupt-Thread durch den Interrupt-Thread angehalten wird,
- die Unterbrechungsroutine im Hauptthread weitergeführt wird und
- die Abarbeitung des Programms im Hauptthread nach Beendigung der Unterbrechungsroutine im Hauptthread wieder aufgenommen wird.

3. Verfahren nach Anspruch 2, bei dem
- nach Anhalten des Hauptthreads durch den Interrupt-Thread die Befehlspipeline des Hauptthreads geleert wird und ein aktueller Kontext des Hauptthreads gesichert wird,
- nach Sicherung des aktuellen Kontextes ein neuer, für die Unterbrechungsbehandlung benötigter Kontext im Hauptthread geladen wird.

4. Verfahren nach Anspruch 3, bei dem
Informationen zum Laden des zur Unterbrechungsbehandlung nötigen Kontextes im Interrupt-Thread vorbereitet und an den Hauptthread weitergeleitet werden.

5. Verfahren nach einem der Ansprüche 3 oder 4, bei dem
der Hauptthread nach Laden des neuen Kontextes zur Weiterführung der Unterbrechungsroutine durch den Interrupt-Thread und den Prozessor erneut gestartet wird.

6. Verfahren nach einem der Ansprüche 2 bis 5, bei dem Nacharbeiten der Unterbrechungsbehandlung im Interrupt-Thread durchgeführt werden.

7. Verfahren nach Anspruch 6, bei dem
nach Beendigung der Unterbrechungsroutine im Hauptthread Informationen zur Nachbearbeitung der Unterbrechungsbehandlung vom Hauptthread an den Interrupt-Thread weitergeleitet werden.

8. Verfahren nach einem der Ansprüche 1 bis 7, bei dem
die Unterbrechungsroutine durch den Prozessor im Interrupt-Thread vorinitialisiert wird, indem zur Unterbrechungsbehandlung benötigte Registerwerte in einem dem Interrupt-Thread zugeordneten Register geladen werden.

9. Verfahren nach einem der Ansprüche 1 bis 8, bei dem
der Interrupt-Thread nach Behandlung der Unterbrechung und gegebenenfalls nach Durchführung von Nacharbeiten der Unterbrechungsbehandlung wieder durch den Prozessor in einen Schlafmodus versetzt wird.

10. Verfahren nach einem der Ansprüche 1 bis 9, bei dem
der Interrupt-Thread erst dann durch den Prozessor aktiviert wird, wenn eine Unterbrechungsaufforderung auftritt.

11. Verfahren nach einem der Ansprüche 1 bis 10, bei dem
den wenigstens zwei Threads voneinander unabhängige Register zugeordnet sind.

## Claims

1. Method for processing interrupt requests in a processor that is suitable for executing at least two threads in parallel, wherein an instruction pipeline is provided for each of the at least two threads, the method comprising the following steps:
- defining one of the at least two threads as a main thread for processing a program,
- assigning a thread of the at least two threads as an interrupt thread to the main thread,
- starting the main thread by the processor,
- receiving an interrupt request,
- storing interrupt data in a register assigned to the interrupt thread by the processor,
- starting the processing of an interrupt routine in the interrupt thread;
**characterized in that**
the following steps are additionally carried out:
- placing the interrupt thread in a standby mode after a pre-initialization of the interrupt thread,
- stopping the processing of the program in the main thread after the interrupt request is received,
- executing a part of the interrupt routine in the interrupt thread,
- resuming processing the program in the main thread after processing the one part of the interrupt routine in the interrupt thread, wherein resumption is started by transmitting a signal from the interrupt thread to the main thread,
- carrying out interrupt post-processing in the interrupt thread parallel to the resumed processing of the program in the main thread.

2. Method according to claim 1, in which
- processing of the program in the main thread is stopped by the interrupt thread after carrying out the at least one part of the interrupt routine in the interrupt thread,
- the interrupt routine is continued in the main thread, and
- processing the program in the main thread is resumed after completion of the interrupt routine in the main thread.

3. Method according to claim 2, in which
- the instruction pipeline of the main thread is deleted and a current context of the main thread is secured after stopping the main thread by the interrupt thread,
- a new context required for the interrupt processing is loaded into the main thread after securing the current context.

4. Method according to claim 3, in which
information for loading the context required for interrupt processing is prepared in the interrupt thread and transmitted to the main thread.

5. Method according to one of claims 3 or 4, in which the main thread is re-started after loading the new context for continuing the interrupt routine by means of the interrupt thread and the processor.

6. Method according to one of claims 2 to 5, in which interrupt post-processing is carried out in the interrupt thread.

7. Method according to claim 6, in which information for interrupt post-processing is transmitted from the main thread to the interrupt thread after completion of the interrupt routine in the main thread.

8. Method according to one of claims 1 to 7, in which the interrupt routine is pre-initialized by the processor in the interrupt thread, in that register values required for interrupt processing are loaded in a register assigned to the interrupt thread.

9. Method according to one of claims 1 to 8, in which the interrupt thread is again placed in a standby mode by the processor after processing the interrupt and if applicable after carrying out interrupt post-processing.

10. Method according to one of claims 1 to 9, in which the interrupt thread is not activated by the processor until an interrupt request occurs.

11. Method according to one of claims 1 to 10, in which independent registers are assigned to the at least two threads.

## Revendications

1. Procédé de traitement de demandes d'interruptions dans un processeur qui est approprié à l'exécution parallèle d'au moins deux threads, un pipeline d'instructions étant ménagé pour chacun des au moins deux threads, comprenant les étapes suivantes :
- définition d'un des au moins deux threads en tant que thread principal pour l'exécution d'un programme,
- attribution d'un thread des au moins deux threads en tant que thread d'interruption par rapport au thread principal,
- démarrage du thread principal par le processeur,
- réception d'une demande d'interruption,
- dépôt, par le processeur, de données d'interruption dans un registre attribué au thread d'interruption,
- démarrage de l'exécution d'une routine d'interruption dans le thread d'interruption,
**caractérisé en ce que**
les étapes suivantes sont réalisées en plus :
- mise du thread d'interruption dans un mode de veille après une pré-initialisation du thread d'interruption,
- arrêt de l'exécution du programme dans le thread principal après la réception de la demande d'interruption,
- réalisation d'une partie de la routine d'interruption dans le thread d'interruption,
- reprise de l'exécution du programme dans le thread principal après la réalisation de l'une partie de la routine d'interruption, la reprise étant démarrée par la sortie d'un signal du thread d'interruption au thread principal,
- exécution de tâches du traitement d'interruptions dans le thread d'interruption pendant la reprise de l'exécution du programme dans le thread principal.

2. Procédé selon la revendication 1, dans lequel
- l'exécution du programme dans le thread principal, après la réalisation de l'au moins une partie de la routine d'interruption dans le thread d'interruption, est arrêtée par le thread d'interruption,
- la routine d'interruption est poursuivie dans le thread principal et
- l'exécution du programme dans le thread principal est reprise après l'achèvement de la routine d'interruption dans le thread principal.

3. Procédé selon la revendication 2, dans lequel
- après l'arrêt du thread principal par le thread d'interruption, le pipeline d'instructions du thread principal est vidé et un contexte actuel du thread principal est sauvegardé,
- après la sauvegarde du contexte actuel, un nouveau contexte nécessité pour le traitement d'interruptions dans le thread principal est téléchargé.

4. Procédé selon la revendication 3, dans lequel
des informations pour le téléchargement du contexte nécessité pour le traitement d'interruptions sont préparées dans le thread d'interruption et transmises au thread principal.

5. Procédé selon l'une quelconque des revendications 3 ou 4, dans lequel
le thread principal, après le téléchargement du nouveau contexte, est de nouveau démarré pour la poursuite de la routine d'interruption par le thread d'interruption et le processeur.

6. Procédé selon l'une quelconque des revendications 2 à 5, dans lequel
des tâches du traitement d'interruptions sont réalisées dans le thread d'interruption.

7. Procédé selon la revendication 6, dans lequel
après l'achèvement de la routine d'interruption dans le thread principal, des informations pour le traitement ultérieur du traitement d'interruptions sont transmises par le thread principal au thread d'interruption.

8. Procédé selon l'une quelconque des revendications 1 à 7, dans lequel
la routine d'interruption est pré-initialisée par le processeur dans le thread d'interruption du fait que des valeurs de registre nécessitées pour le traitement d'interruptions sont téléchargées dans un registre attribué au thread d'interruption.

9. Procédé selon l'une quelconque des revendications 1 à 8, dans lequel
le thread d'interruption, après le traitement de l'interruption et, le cas échéant, après la réalisation de tâches du traitement d'interruptions est de nouveau mis dans un mode de veille par le processeur.

10. Procédé selon l'une quelconque des revendications 1 à 9, dans lequel
le thread d'interruption est activé par le processeur seulement si une demande d'interruption se manifeste.

11. Procédé selon l'une quelconque des revendications 1 à 10, dans lequel
des registres indépendants les uns des autres sont attribués aux au moins deux threads.
